# EUROPÄISCHE PATENTSCHRIFT

(11) **EP 1 833 636 B1**
(45) Veröffentlichungstag und Bekanntmachung des Hinweises auf die Patenterteilung: **21.07.2010**
(21) Anmeldenummer: 05796451.2
(22) Anmeldetag: 01.11.2005
(51) Int. Cl.: B23K 26/14, B26F 1/31, B26F 3/00, B23K 26/42, B23K 26/06

(54) **VERFAHREN UND VORRICHTUNG ZUR ERZEUGUNG EINES FLÜSSIGKEITSSTRAHLS FÜR EINE MATERIALBEARBEITUNG**
PROCESS AND DEVICE FOR OPTIMISING THE COHERENCE OF A FLUIDJET USED FOR MATERIALWORKING
MÉTHODE ET DISPOSITIF POUR OPTIMISER LA COHÉRENCE D'UN JET DE FLUIDE UTILISÉ POUR LE TRAVAIL DE MATÉRIAUX

(30) Priorität: 10.11.2004 EP 04405689
(43) Veröffentlichungstag der Anmeldung: 19.09.2007
(73) Patentinhaber: SYNOVA S.A., 1024 Ecublens (CH)
(72) Erfinder: RICHERZHAGEN, Bernold, CH-1025 St-Sulpice (CH); SPIEGEL, Akos, CH-1022 Chavannes (CH)
(74) Vertreter: Roshardt, Werner Alfred
(86) Internationale Anmeldenummer: PCT/CH2005/000636
(87) Internationale Veröffentlichungsnummer: WO 2006/050622

(56) Entgegenhaltungen:
- WO-A-99/56907
- DE-A1- 10 113 475
- DE-A1- 19 518 263
- US-A1- 2004 164 058
- DATABASE WPI Section Ch, Week 200119 Derwent Publications Ltd., London, GB; Class M23, AN 2001-185155 XP002324969 -& JP 2000 334590 A (AMADA CO LTD) 5. Dezember 2000 (2000-12-05) in der Anmeldung erwähnt

## Beschreibung

Die Erfindung betrifft ein Verfahren zur Erzeugung eines Flüssigkeitsstrahls gemäß dem Oberbegriff des Anspruchs 1 und eine Vorrichtung zur Erzeugung eines Flüssigkeitsstrahls gemäß dem Oberbegriff des Anspruchs 6 (siehe z.B. WO 99/56907).

### Stand der Technik

Die Materialbearbeitung durch Laserstrahlung hat sich in den vergangenen Jahren in vielen Bereichen etabliert. Eine technisch weiterentwickelte Variante davon ist das Schneiden mit einem wasserstrahlgeführten Laser (EP 0 762 947 B1, WO 99/56907). Der Laserstrahl wird in einen dünnen Wasserstrahl eingekoppelt, um so zur Materialbearbeitungsstelle geführt zu werden. Da der Wasserstrahl .den Laserstrahl in der Art eines optischen Wellenleiters führt, bleibt die Strahlenergie über eine relativ grosse Länge auf den durch den Wasserstrahl vorgegebenen Querschnitt konzentriert. Je grösser die Kohärenzlänge des Wasserstrahls ist, d.h. je später der Wasserstrahl in Tröpfchen zerfällt, desto grösser ist die Variabilität der Arbeitsdistanz der Vorrichtung.

In der JP 2000-334590 ist ebenfalls eine Vorrichtung zur wasserstrahlgeführten Laserbearbeitung beschrieben. Dabei wird vorgeschlagen, den Wasserstrahl mit einem Gasstrahl (z.B. Stickstoff, Argon, Sauerstoff oder Luft) zu umhüllen, indem die Wasserstrahldüse von einer Ringdüse für das Gas umgeben wird.

Eine verbreitete Alternative zur Laserbearbeitung ist das Wasserstrahlschneiden. Dabei wird mit sehr feinen Düsen von deutlich unter 1 mm ein Wasserstrahl erzeugt, mit dessen kinetischer Energie das Werkstück bearbeitet werden kann. Aus der DE 101 13 475 A1 ist dabei bekannt, dass die Kohärenzlänge des Wasserstrahl erhöht werden kann, indem der Wasserstrahl in einem Arbeitsraum mit kontrollierter .Atmosphäre verwendet wird. Der Arbeitsraum wird z.B. mit Unterdruck versehen oder mit einem Spülgas beschickt, dessen Dichte kleiner als diejenige von Luft ist (insbesondere Wasserstoff, Helium oder Methan). Das Spülgas ergiesst sich aus einer hinter der Wasserstrahldüse angeordneten Kammer grossvolumig über das Werkstück.

Auf ganz anderen Überlegungen basiert die in der US-A 4,047,580 beschriebene Technologie. Diese betrifft ein Verfahren zum Abgraben, Durchdringen oder Zerkleinern von Bodenschichten mit einem grossen Hochgeschwindigkeitswasserstrahl. Damit der Wasserstrahl auch in einer Flüssigkeit (z.B. unter Wasser) eine grössere Strecke durchdringen kann, wird er mit einem Gasstrahl umhüllt, der mindestens die halbe Schallgeschwindigkeit hat. Zur Strahlerzeugung wird eine konzentrische Doppeldüse verwendet Der Wasserstrahl tritt aus der kreisförmigen Innendüse und der Gasstrahl aus der ringförmigen Aussendüse aus. Der Gasstrahl schafft quasi einen Freiraum im wassergefluteten Arbeitsbereich, so dass der Arbeitswasserstrahl nicht im Wasservolumen verwirbelt, sondern sich in einem "Unterwasserluftkanal" ausbreiten kann.

Die bisher bekannten Methoden zur Verlängerung der Kohärenzlänge eines Wasserstrahls eignen sich entweder nicht für die wasserstrahl-geführte Lasertechnologie oder bringen namentlich bei dünnen Flüssigkeitsstrahlen keine brauchbaren Ergebnisse.

### Darstellung der Erfindung

Aufgabe der Erfindung ist es, ein dem eingangs genannten technischen Gebiet zugehörendes Verfahren zu schaffen, welches auch bei sehr dünnen Flüssigkeitsstrahlen eine ausreichend grosse, insbesondere eine gegenüber dem Stand der Technik verbesserte, Kohärenz der Strahllänge des Flüssigkeitsstrahls ermöglicht. Weiter ist es Aufgabe der Erfindung eine Vorrichtung zur Durchführung des Verfahrens anzugeben.

Gemäss der Erfindung sind ein Verfahren und eine Vorrichtung in den Ansprüche 1 und 6 definiert.

Flüssigkeitsdüse und Gasauslassdüse sind also in z-Achse (Strahlachse) nicht auf der gleichen Position (wie bei der eingangs erwähnten JP 2000-334590) sondern zueinander in z-Richtung versetzt. Zuerst formt die Flüssigkeitsdüse den (vorzugsweise sehr dünnen) Flüssigkeitsstrahl und danach formt die Gasauslassdüse den Gasstrom. Diese Anordnung erlaubt es, die Gasauslassdüse optimal auf die strömungstechnischen Anforderungen für eine gute Gasstrahlerzeugung auszubilden. Anders als bei der "integrierten" Anordnung gemäss JP 2000-334590) muss der Gasauslass nicht um eine Flüssigkeitsdüse herum konstruiert werden (und es muss folglich nicht den Gegebenheiten der Flüssigkeitsdüse Rechnung getragen werden). Ein weiterer Vorteil gegenüber der "integrierten" Anordnung besteht darin, dass die Flüssigkeitsdüse auswechselbar ausgestaltet sein kann. Das heisst, die (technisch diffizile und daher leichter beschädigbare) Flüssigkeitsdüse kann ersetzt werden, ohne dass gleichzeitig die Gasauslassdüse ersetzt werden muss.

Die erfindungsgemässe Gasauslassdüse wird typischerweise durch einen im Querschnitt kreisförmigen Durchgang gebildet. Der Wasserstrahl schiesst im Wesentlichen zentral durch den Durchgang. Der Gasstrahl wird unmittelbar an den Flüssigkeitsstrahl angeformt. Es sind also keine Trennwände zwischen dem zentralen Flüssigkeitsstrahl und dem Austritt bzw. dem Ort der Erzeugung des Gasstrahls vorhanden, wie z.B. in der eingangs zitierten Je 2000-334590). Unerwünschte Turbulenzen im Gasstrom (insbesondere zwischen dem Flüssigkeitsstrahl und dem Gasstrom) können so minimiert werden.

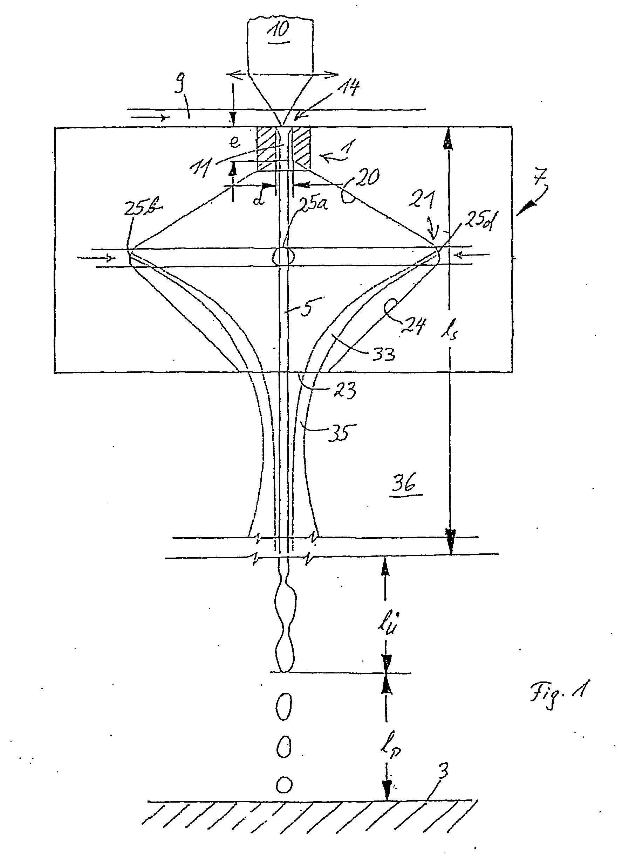

Nach einer einen Strahl erzeugenden Düse 1 hat jeder Flüssigkeitsstrahl, wie in **Figur 1** angedeutet ist, eine stabile Strahllänge ℓₛ. An diesen stabilen (kohärenten) Bereich schliesst ein Bereich mit einer Länge ℓ_{Ü} an, in der der Strahlmantel beginnt sich einzuschnüren. Diesen "Einschnürbereich" bezeichnet man als Übergangsbereich. Nach dem Übergangsbereich erfolgt ein Zerperlen des Strahls in einzelne Tropfen, welche über die Falllänge ℓ_{P} in leicht abgeflachte annähernd kugelförmige Tropfen übergehen. Die stabile Strahllänge ℓₛ ist bei einem frei auslaufenden Strahl länger als bei einem auf eine Werkstückoberfläche zur Materialbearbeitung auftreffenden Strahl.

Wird eine Materialbearbeitung mit einem "abrasiven" Hochdruck-Flüssigkeitsstrahl vorgenommen, so kann noch im Übergangsbereich, eventuell auch noch mit einem zerperlenden Flüssigkeitsstrahl, gearbeitet werden. Wird jedoch der Flüssigkeitsstrahl als Strahlleiter verwendet, in dem z.B. die Strahlung eines Laserstrahls eingekoppelt wird, um einen "kalten Schnitt" bzw. einen "kalten" Materialabtrag zu erhalten, wie beispielsweise in der WO 95/32834 und der WO99/56907 beschrieben, so beginnt in den Flüssigkeitsstrahl eingekoppelte Strahlung im Übergangsbereich seitlich aus dem flüssigkeitsstrahl auszutreten. Diese bereits ausgetretene Strahlung ist für die Materialbearbeitung verloren.

Bei einer herkömmlichen Laserbearbeitung, bei der die Laserstrahlung auf die zu bearbeitende Werkstückoberfläche fokussiert wird, muss der Fokuspunkt einem Oberflächenprofil tiefenmässig (d.h. in Richtung der z-Achse) nachgefahren werden. Bei in einen Flüssigkeitsstrahl eingekoppelter Laserstrahlung hingegen entfällt dieses tiefenmässige Nachstellen hier der Düse, sofern die Profilunterschiede kleiner sind als die stabile Strahllänge ℓₛ (minus Düsenabmessungen). Für eine optimale Materialbearbeitung mit einem in einen Flüssigkeitsstrahl eingekoppelten Laserstrahl sollte deshalb eine möglichst grosse stabile Flüssigkeitsstrahllänge erreicht werden.

Um einen Flüssigkeitsstrahl, der als Strahlleiter für eine Laserstrahlung dient, mit einer möglichst fangen stabilen Strahllänge ℓₛ zu erreichen, wird im Gegensatz zum Stand der Technik zuerst der Flüssigkeitsstrahl mit eingekoppelter Laserstrahlung erzeugt und dieser Flüssigkeitsstrahl dann durch eine Gasauslassdüse geführt. Die Gasauslassdüse formt einen den Flüssigkeitsstrahl umhüllenden Gasstrahl. Typischerweise (aber nicht zwingend) fällt die Strahlachse des Flüssigkeitsstrahls (bis auf eine Toleranz) mit der Düsenachse der Gasauslassdüse zusammen. Zwischen der Düse, welche den Flüssigkeitsstrahl erzeugt, und der Gasauslassdüse ist quasi ein Stauraum für das Gas gebildet. Es liegt in der Natur einer Düse, dass sie eine Verengung darstellt für das Fluid, welches aus einem ersten Bereich (hier dem Bereich zwischen Flüssigkeitsstrahldüse und Gasauslassdüse) durch die Düse (hier die Gasauslassdüse) in einen zweiten Bereich (hier der Bereich zwischen Gasauslassdüse und Materialoberfläche) strömen soll.

Bei einer Materialbearbeitung mit einem im Flüssigkeitsstrahl geführten Laserstrahl (z.B. die Strahlung eines Nd:YAG-Lasers mit einer Wellenlänge von 1,06 µm) hat der Flüssigkeitsstrahl typischerweise einen Durchmesser im Bereich von 20 µm bis 200 µm. Die Gasauslassdüse hat einen Durchmesser von typischerweise 0,5 mm bis 2 mm. Als Richtwert sollte gelten: Der Durchmesser des Düsenkanals der Gasauslassdüse sollte etwa zehnmal bis zwanzigmal so gross sein wie der Durchmesser des Kanals der Flüssigkeitsdüse. Dies ist allerdings keine zwingende Dimensionsvorgabe der Erfindung. Eine Toleranz für das Übereinstimmen der Gas- und der Flüssigkeitsstrahlachse im Gasauslassdüsenbereich ist vorzugsweise derart, dass der Flüssigkeitsstrahl durch die Mitte der Gasauslassdüse mit einer Toleranz von ± 200 µm gehen sollte.

Im Gegensatz zum Stand der Technik werden lange stabile Strahllängen erreicht, wenn, wie oben ausgeführt, zuerst der Flüssigkeitsstrahl mit eingekoppelter Laserstrahlung gebildet wird und erst nach einem vorgegebenen Weg (d.h. stromabwärts bezüglich der Flüssigkeitsdüse) das Beaufschlagungsgas zugeführt wird. Im Stand der Technik wird das Beaufschlagungsgas immer in unmittelbarer Nähe zur Bildung des Flüssigkeitsstrahles zugeführt, wobei die Ausströmrichtungen der Flüssigkeit des Flüssigkeitsstrahls und diejenige des Beaufschlagungsgases parallel zueinander gewählt wurden.

Die Erfindung geht davon aus, dass die Gasbeaufschlagung derart erfolgen muss, dass am Ort der Gaseinströmung möglichst keine Störung des Flüssigkeitsstrahls erfolgen darf. Eine Störung auf den Flüssigkeitsstrahl wirkt sich nämlich bedeutend stärker auf eine Verkürzung der Strahllänge aus als eine erreichbare Verlängerung durch die Eigenschaften des Beaufschlagungsgases.

Vorzugsweise wird ein Beaufschlagungsgas in einem Hohlraum eines Gehäuses derart eingebracht, dass der eingebrachte Gasstrom den Flüssigkeitsstrahl nicht direkt trifft, sondern dass der gesamte Hohlraum mit dem Beaufschlagungsgas füllbar ist (d.h. das Gas staut sich) und dass das Beaufschlagungsgas den Flüssigkeitsstrahl umhüllend das Gehäuse verlässt.

Vorzugsweise wird das Beaufschlagungsgas in einen Gehäuseinnenraum eingebracht. Bei dem Gehäuse ist dann einem als Gasdüse ausgebildeten Auslass gegenüberliegend die Flüssigkeitsdüse angeordnet. Wie unten noch ausführlich ausgeführt wird, ist dann der durch die Flüssigkeitsdüse erzeugte Flüssigkeitsstrahl sofort mit dem Beaufschlagungsgas umgeben.

Nicht jedes Gas ist gleich gut als Beaufschlagungsgas geeignet. Die kinematische Gasviskosität des verwendeten Beaufschlagungsgases sollte kleiner sein als diejenige des Atmosphärengases (= Umgebungsgas am Bearbeitungsort). Sofern nicht unter einem Schutzgas gearbeitet wird, ist Luft das Atmosphärengas. Unter einer kinematischen Gasviskosität wird eine Viskosität bezogen auf das spezifische Gewicht des Gases verstanden. Die kinematische Gasviskosität von Luft beträgt bei 20°C und einem Druck von 1 atm 151,1·10⁻³ cm²/sec.

Gemäss American Institute of Physics Handbook, Second Edition, Seite 2-229 kämen somit beispielsweise die nachfolgenden Gase in Frage, wobei die angegebenen Werte die Dimension 10⁻³ cm²/sec haben:
Wasserstoff (H₂) 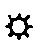 1,059
Helium (He) 1,179
Acetylen (C₂H₂) 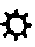 80,6
Ammoniak (NH₃) * 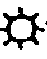 ^{†} 138
Argon (Ar) 134,3
Bromgas *(Br₂) 22,50
iso-Butan (C₄H₁₀) 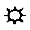 31,0
n-Butan (C₄H₁₀) 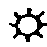 35, 1
Chlor (Cℓ₂) *^{†} 150,6
Chloroform (CHCl₃) *^{†}20,16
Cyan (C₂N₂)^{†} 46,35
Ethan (C₂H₆) 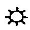 72,9
Ethylen (C₂H₄) 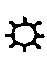 85,84·10⁻³ cm²/sec
Bromwasserstoff *^{†} (HBr) 54,79
Chlorwasserstoffgas <HCℓ) *^{†} 93,99
Jodwasserstoff * (HJ) 34,42
Kohlendioxid (CO₂) 80,9
Krypton (Kr) 72,44
Methylbromid (CH₃Br)* 33,64
Methylchlorid 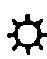 ^{†} (CH₃Cl) 50,97
Distickstoffoxid * 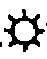 ^{†} (N₂O) 150,9
Propan (C₃H₈) 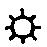 43,7
Schwefeldioxidgas (SO₂) *^{†} 46,94
Xenon (Xe) 42,69

Die mit * gekennzeichneten Gase sind, sofern als Flüssigkeitsstrahl ein Wasserstrahl verwendet wird, in diesem lösbar. Je nach Anwendung ist somit Vorsicht geboten. Die mit 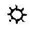 gekennzeichneten Gase sind brennbar und die mit ^{†} gekennzeichneten Gase sind giftig bzw. gesundheitsschädlich; auch bei einer Verwendung dieser Gase sollte man Vorsicht walten lassen. Gase ohne eine obige Kennzeichnung, wie beispielsweise Helium, Argon, Kohlendioxid, Krypton und Xenon können ohne Vorsichtsmassnahmen verwendet werden.

Vorzugsweise wird das Gas in einem radialen Abstand von der Achse des Flüssigkeitsstrahls in einer geraden Strömungsrichtung, welche vom Flüssigkeitsstrahl weggerichtet ist, eingelassen. Damit kann erreicht werden, dass durch die Gasbeaufschlagung möglichst keine Beeinflussung des Flüssigkeitsstrahls am Ort des Gaseinlasses und dessen Umgebung erfolgt. Diese erste Gasströmungsrichtung ist derart ausgelegt, dass die Strömung einen um den Flüssigkeitsstrahl zentrisch gelegten Kreis tangential berührt. Diese erste Strömungsrichtung wird dann in eine zweite Strömungsrichtung umgelenkt, welche um den Flüssigkeitsstrahl rotiert. Die Gaszuführung kann nun an einem einzigen Ort erfolgen. Vorzugsweise wird man jedoch mehrere von einander gleich distanzierte Zuführorte wählen, und die erste Gasströmungsrichtung unter ein und demselben Winkel ("tangentiale" Richtung) vornehmen, wodurch eine Rückwirkung auf den Flüssigkeitsstrahl aufgrund einer weitgehend homogenen Strömung des eingelassenen Gases reduziert wird. Von der Strahlachse aus haben dann jeweils zwei benachbarte Zuführorte den gleichen Zentriwinkel.

Fliesst der Flüssigkeitsstrahl vertikal, wie allgemein üblich, kann die erste Gaseinströmrichtung horizontal vorgenommen werden. Die erste Gaseinströmrichtung kann jedoch auch nach oben oder nach unten gerichtet sein. Nach oben wird man einen Winkel kleiner 30° und nach unten einen Winkel kleiner 70° wählen.

Wie oben ausgeführt, soll die erste Gasströmrichtung tangential an einen um den Flüssigkeitsstrahl d.h. und dessen Strahlachse zentrischen Kreis erfolgen. Liegt dieser Kreis in einer Ebene, welche von der Strahlachse senkrecht durchstossen wird, kann die erste Gasströmungsrichtung in dieser Ebene erfolgen oder gegenüber dieser Ebene nach oben (bis +30°) oder nach unten (-70°) gerichtet sein.

Anstelle einer "tangentialen" Gaszufuhr kann auch eine radiale gewählt werden. Die Gaszufuhr kann richtungsmässsig auch diffus sein. Während bei einer gerichteten (radialen, d.h. auf die Achse des Flüssigkeitsstrahl zielenden, oder "tangentialen", d.h. windschief zur. Achse des Flüssigkeitsstrahls zielenden) Gaszufuhrrichtung ist dem Gas eine bestimmte Richtung aufgeprägt (z.B. durch geeignet ausgebildetet Gaszuführkanäle). Bei einer diffusen Gaszufuhr ist dagegen keine bestimmte und zumindest keine einheitliche Richtung vorgegeben.

Die zweite, um den Flüssigkeitsstrahl rotierende Gasströmung wird anschliessend vorzugsweise in eine dritte Gasströmung, welche derjenigen des Flüssigkeitsstrahls entspricht, umgelenkt. Die Umlenkung erfolgt aus einer ersten, annähernd ruhigen Gasbeaufschlagungsphase in eine rotierende Gasströmung mit in Fliessrichtung des Flüssigkeitsstrahls beschleunigter Gasströmung, wobei auch noch die Rotationsgeschwindigkeit erhöht werden kann. Ein derartiger "rotierender" Einlass, wobei diese Rotationsbewegung ziemlich schnell zum Erliegen kommt, ergibt, wie unten ausgeführt wird, eine grosse stabile Flüssigkeitsstrahllänge ℓₛ.

Um eine Gasummantelung eines Flüssigkeitsstrahls zu erreichen, welche eine grosse stabile Flüssigkeitsstrahllänge ℓₛ bewirkt, wird ein mit einer umlaufenden Wandung versehenes Gehäuse verwendet. In dem Gehäuse sind eine Flüssigkeitsdüse und wenigstens ein Gaseinlass angeordnet. Ferner ist eine Gasauslassdüse vorhanden, durch die der Flüssigkeitsstrahl derart hindurchführbar ist, dass eine erste Achse des Flüssigkeitsstrahls und eine zweite Achse des durch die Gasauslassdüse ausströmenden Gases im Wesentlichen (d.h. bis auf eine oben angeführte Toleranz) zusammenfallen.

Vorzugsweise wird man einen Gaseinlass, nicht wie es der Stand der Technik tut, am Ort der Flüssigkeitsdüse vornehmen, sondern der Flüssigkeitsdüse strömungstechnisch nachordnen. Wenn der Gasstauraum aber genügend gross ausgebildet ist, kann der Gaseinlass auch an einem anderen Ort (z.B. unmittelbar nach der Flüssigkeitsdüse) platziert werden.

Das Gehäuse wird man vorzugsweise als einen vertikal stehenden (d.h. parallel zur Flüssigkeitsstrahlachse ausgerichteter) Doppelkegel mit einander gegenüberliegenden Kegelspitzen ausbilden. In der einen oberen Kegelspitze ist dann die Flüssigkeitsdüse angeordnet und in der gegenüberliegenden unteren Kegelspitze die Gasauslassdüse. Den Gaseinlass wird man vorzugsweise im Bereich des grössten Durchmessers des Doppelkegels vornehmen. Die trichterförmig nach unten zusammenlaufende Wandung gemäß der Erfindung erzeugt dann eine sich in der nach unten gerichteten Strömung erhöhende Strömungsgeschwindigkeit. Eine anfängliche Gasströmungsrotation durch die "tangentialen" Gaseinlässe kommt ziemlich schnell zum Erliegen, da der Wasserstrahl durch Reibung das Gas mitreisst. Diese Art des Gaseinlasses dient nur für eine möglichst homogene Gasbeaufschlagung des Flüssigkeitsstrahls und der Vermeidung einer Störung des Wasserstrahls.

Der zwischen Flüssigkeitsdüse und Gasauslassdüse gebildete Zwischenraum (d.h. der "Gasstauraum") kann auch anders ausgebildet sein. Sein maximaler Durchmesser senkrecht zur Achse des Flüssigkeitsstrahls beträgt, insbesondere das 10-fache bis 100-fache, vorzugsweise etwa das 20-fache des Durchmessers des Flüssigkeitsstrahls.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung einer Ausführungsvariante der erfindungsge- mässen Vorrichtung,
- Fig. 2: einen Querschnitt durch eine vergrösserte Darstellung eines Düsenkanals einer Flüssigkeitsdüse der in **Figur 1** dargestellten Vorrichtung und

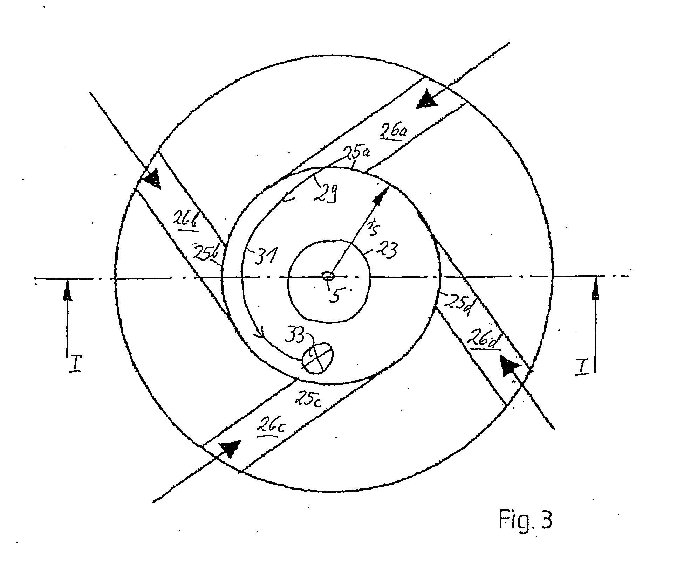

- Fig. 3: einen Querschnitt durch die in **Figur 1** dargestellt Vorrichtung entlang der dortigen Linie III-III,
- Fig. 4: eine stabile Strahllänge ℓₛ eines Flüssigkeitsstrahls in Luft im freien Auslauf (Kurven - - - - und - - -) sowie unter einem Auftreffen auf eine Oberfläche (Kurve -),
- Fig. 5: eine zu **Figur 4** analoge Darstellung, wobei jedoch der Flüssigkeitsstrahl mit Helium, analog der Erfindung beaufschlagt ist, und
- Fig. 6: einen Querschnitt durch eine Vorrichtung mit radialer Gaszuführung.

Grundsätzlich sind in den Figuren gleiche Teile mit gleichen Bezugszeichen versehen.

### Wege zur Ausführung der Erfindung

Die in **Figur 1** dargestellte Ausführungsvariante der erfindungsgemässen Vorrichtung zur Stabilisierung eines mit einer Flüssigkeitsdüse **1** erzeugten Flüssigkeitsstrahls **5** hat ein als so genannter Nozzle ausgebildetes Gehäuse **7.** Die Flüssigkeitsdüse **1** ist als so genannter Düsenstein ausgebildet. Auf die Zuführung der Flüssigkeit **9** für den Flüssigkeitsstrahl **5,** hier von Wasser, und die Einkopplung einer Laserstrahlung **10** in den Flüssigkeitsstrahl **5** wird nicht näher eingegangen. Derartiges ist ausführlich in der WO 95/32834 und der WO 99/56907 beschrieben, welche hiermit als in den vorliegenden Unterlagen eingeschlossen gelten sollen (engl. "inclusion by reference"). Im vorliegenden Zusammenhang genügt es festzuhalten, dass ein (nicht dargestellter) Laser vorhanden ist, dass eine geeignete Optik die vom Laser erzeugte Laserstrahlung in den Wasserstrahl einkoppeln kann (z.B. wie in den eingangs erwähnten Druckschriften dargestellt).

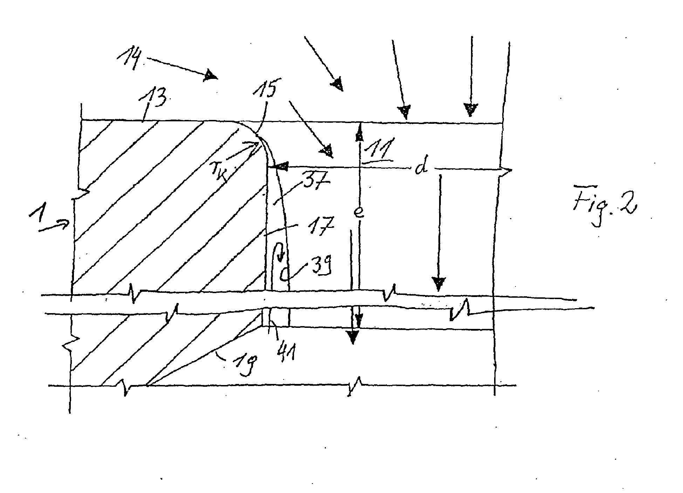

Eine vergrösserte Darstellung eines Düsenkanals **11** der als Düsenstein ausgebildeten Flüssigkeitsdüse **1** zur Erzeugung des Flüssigkeitsstrahls **5** zeigt im Querschnitt **Figur 2****.** Die Flüssigkeitsdüse **1** hat eine glatte Oberfläche **13** und ist vorzugsweise aus Diamant oder einem anderen harten Material gefertigt. Sie hat eine Dicke von 0,5 -2 mm und einen Durchmesser von z.B. 3 mm, hat also die Form eines kleinen zylindrischen Blocks. Ein Radius **r_{K}** einer Lochkante **15** als Eingang in den Düsenkanal **11** wird so klein wie möglich gewählt, um so nahe wie möglich an einen theoretischen "scharfkantigen Einlass" zu kommen. Der Radius **r_{K}** sollte kleiner 10 µm sein und ist hier kleiner als 2 µm. Durch diesen scharfkantigen Einlass wird ein Flüssigkeitsstrahl mit einer bereits grossen stabilen Strahllänge ℓₛ erzeugt. Typische Durchmesser des Düsenkanals **11** liegen bei 20 µm bis 200 µm.

Der an den scharfkantigen Einlass **15** anschliessende zylindrische Teil des Düsenkanals **11** wird so kurz wie möglich gehalten und liegt in der Grössenordnung kleiner als fünf Mal Durchmesser **d** des Düsenkanals **11;** hier ist er drei Mal kleiner. Durch eine derartige Ausgestaltung löst sich die Strömung des Flüssigkeitsstrahls **5** bereits an der Lochkante **15** von der Düsenkanalinnenwand **17** ab. Ein zu langer Düsenkanal **11** würde zu Verwirbelungen eines Gases zwischen der Düsenkanalinnenwand **17** und dem Flüssigkeitsstrahl **5** führen. Kleinste auf den Flüssigkeitsstrahl einwirkende Störungen führen zu einem "Zerwellen" (d.h. einem Zerfallen bzw. Degenerieren des Flüssigkeitsstrahls in einen in z-Richtung welligen Strahlbereich ℓ_{Ü}) und somit zu einer verkürzten verwendbaren Strahllänge (bei eingekoppelter Laserstrahlung). An den zylindrischen Teil **17** der Düsenkanalwand schliesst sich ein konischer Wandbereich **19** an. Dieser konische Teil **19** soll eventuelle Interaktionen des Flüssigkeitsstrahls mit eventuellen Gaswirbeln reduzieren. Dieser konische Teil **19** als Abschrägung sollte einen Winkel zwischen 90° und 150°, vorzugsweise zwischen 130° und 140° mit einer Längsachse des Düsenkanals **11** haben. Hier hat die Schräge **19** einen eine Herstellungstoleranz aufweisenden Winkel von 135°.

Eine ideale Düse **1** wäre somit ein Loch in einer Wand mit einer Wandstärke e = 0. Eine derartige Düse würde aber dem Wasserdruck von einigen Atmosphären Druck nicht Stand halten. Es muss somit ein Kompromiss zwischen einer ausreichenden Festigkeit der Düse **1** und der stabilen Flüssigkeitsstrahllänge ℓ_{S} gefunden werden. Es wird deshalb die Verwendung der oben erwähnten Abschrägung **19** vorgeschlagen.

Die an den Düsenstein **1** anschliessende Innenwand **20** des Gehäuses **7** erweitert sich auf einen maximalen, kreisförmigen Innendurchmesser **21** und verjüngt sich dann als Innenwandteil **24** wieder konisch auf eine Gasauslassdüse **23** hin. Das Gehäuse 7 ist als Doppelkegel ausgebildet, wobei in der einen Kegelspitze die Flüssigkeitsdüse 1 (Düsenstein) und gegenüberliegend, also darunter, die Gasauslassdüse **23** angeordnet ist.

Am Ort des maximalen Innendurchmessers **21** ist mit gleichem radialen Abstand rₛ vom Flüssigkeitsstrahl 5 bzw. von dessen Strahlachse wenigstens ein Gaseinlass für das Beaufschlagungsgas angeordnet. In dem hier gezeigten Beispiel sind vier Gaseinlässe **25a** bis **25d** vorhanden. Der jeweilige Gaseinlass ist als zylindrisches Rohr **26a.** bis **26d** ausgebildet. Jedes dieser Rohre **26a** bis **26d** mündet tangential an der Innenwandung **27** im Bereich des maximalen Innendurchmessers **21** (d.h. im radialen Abstand **rₛ**). Die Gasströmung aus jedem der Rohre **26a** bis **26d** strömt somit in einem ersten Strömungsteil **29** "tangential" (im vorliegenden Beispiel also nicht radial) gegen die Innenwandung **27** und wird beim Auftreffen auf die Innenwandung **27** in einen umlaufenden d.h. einen zweiten Strömungsteil **31** mit einer rotierenden Strömungskomponente umgelenkt:

Die Gasauslassdüse **23** ist derart angeordnet, dass sie mittig vom die Laserstrahlung führenden Flüssigkeitsstrahl 5 durchdrungen wird. Da ein Gasauslass nur durch diese Gasauslassdüse **23** möglich ist, wird die Strömung des Beaufschlagungsgases in einem dritten Strömungsteil **33** durch die Reibung mit dem Flüssigkeitsstrahl **5** nach unten gegen die Gasauslassdüse **23** unter einer Erhöhung der nach unten gerichteten Strömungskomponente abgelenkt. Der aus den Gehäuse **7** durch die Gasauslassdüse **23** austretende Flüssigkeitsstrahl **5** ist nun mit einem um den Flüssigkeitsstrahlmantel liegenden Beaufschlagungsgasstrom **35** weitgehend gegenüber der Umgebungsluft **36** abgeschirmt. Eine anfängliche Strömungsrotation im Bereich der vier Gaseinlassdüsen **25a** bis **25d** wird zunehmend durch die nach unten gerichtete Strömungskomponente überlagert und wird noch innerhalb des Gehäuses **7** weitgehend von dieser dominiert.

Wie in **Figur 2** dargestellt ist, bildet sich strömungsmässig nach der Lochkante **15** ein Zwischenraum **37** zwischen dem Mantel **39** des Flüssigkeitsstahls **5** und der zylindrischen Düsenkanalinnenwand **17.** Gemäss dem Effekt einer Wasserstrahlpumpe wird, wie durch den Pfeil **41** angedeutet, das Beaufschlagungsgas in den Zwischenraum **37** eingezogen und mit dem Flüssigkeitsstrahl **5** mitgerissen. Da nur wenig Beaufschlagungsgas in den Zwischenraum **37** eindringt, herrsch hier ein Unterdruck in einer Beaufschlagungsgasatmosphäre.

Zusammenfassend lässt sich zur Erzeugung einer langen stabilen Flüssigkeitsstrahllänge ℓ_{S} ausführen, dass (gemäss dem soeben erläuterten Ausführungsbeispiel)
- unmittelbar nach Bildung des Flüssigkeitsstrahls 5 sich dieser in einem Unterdruckbereich, aber in einer Beaufschlagungsgasatmosphäre befindet,
- das Beaufschlagungsgas in einem möglichst grossen Abstand vom Flüssigkeitsstrahl in einer nicht auf diesen gerichteten Strömungsrichtung in den "Gasstauraum" zugeführt wird,
- dem Beaufschlagungsgas eine um den Flüssigkeitsstrahl rotierende Strömungskomponente sowie eine Strömungskomponente in Strömungsrichtung des Flüssigkeitsstrahls aufgeprägt werden kann, wobei beide Strömungskomponenten beschleunigend gegen den Flüssigkeitsstrahlmantel geführt werden,
- der Flüssigkeitsstrahl **5** erst nachdem die Gasbeaufschlagung erfolgt ist durch die Mitte einer Gasauslassdüse **23** ins "Freie" tritt,
- der Flüssigkeitsdüsenkanal möglichst kurz im Verhältnis zu seinem Durchmesser ausgebildet ist,
- der Flüssigkeitsdüsenkanaleingang möglichst scharfkantig geformt ist.
Jedes dieser Merkmale trägt zur Verlängerung des stabilen Bereichs der Strahllänge ℓₛ bei. Hauptaugenmerk sollte jedoch vorzugsweise darauf gerichtet werden, dass
➢ der Flüssigkeitsstrahl durch eine, entfernt von der Flüssigkeitsdüse, einen Beaufschlagungsgasstrahl formende Gasauslassdüse hindurchgeführt wird, wobei die Achse des Flüssigkeitsstrahls und die Achse des gebildeten Gasstrahls im Wesentlichen (d.h. bis auf eine Toleranz) zusammenfallen
   oder
➢ dass das Beaufschlagungsgas erst nach einem vorgegebenen Weg von der Flüssigkeitsdüse entfernt strömungsmässig nachgeschaltet zugeführt wird.

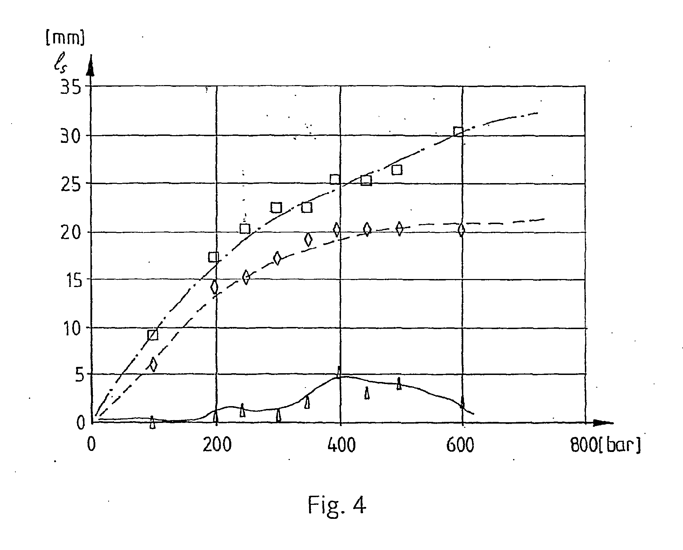

Zur experimentellen Veranschaulichung der obigen Ausführung zeigt das in **Figur 4** dargestellte Diagramm die stabile Strahllänge ℓₛ eines mit einem Düsenstein 1 erzeugten Wasserstrahls 5, wobei der Düsenkanalquerschnitt des Düsensteins 1 30 µm beträgt. Auf der Ordinate ist die stabile Strahllänge ℓₛ und auf der Abszisse der Flüssigkeitsdruck der Flüssigkeit unmittelbar vor dem Eintritt in den Düsenkanal **11** angegeben. Die strichpunktierte Messkurve mit den Messpunkten "■" gibt die jeweils maximale stabile Strahllänge ℓₛ und die gestrichelte Messkurve mit den Messpunkten "◆" gibt die jeweils minimale stabile Strahllänge ℓₛ an. (Die Strahllänge schwankt im Verlauf der Zeit zwischen der angegebenen maximalen und minimalen Strahllänge.) Bei der strichpunktierten und bei der gestrichelten Messkurve hat der Flüssigkeitsstrahl einen freien Auslauf; d.h. erst in einem Abstand von einigen Zentimetern in der zerperlenden Strahllänge ℓ_{P} trifft die nun keinen Strahl mehr darstellende Flüssigkeit auf eine Oberfläche. Die dritte, untere durchgezogene Messkurve mit den Messpunkten "▲" stellt die stabile Strahllänge eines auf eine Oberfläche auftreffenden Flüssigkeitsstrahls dar.

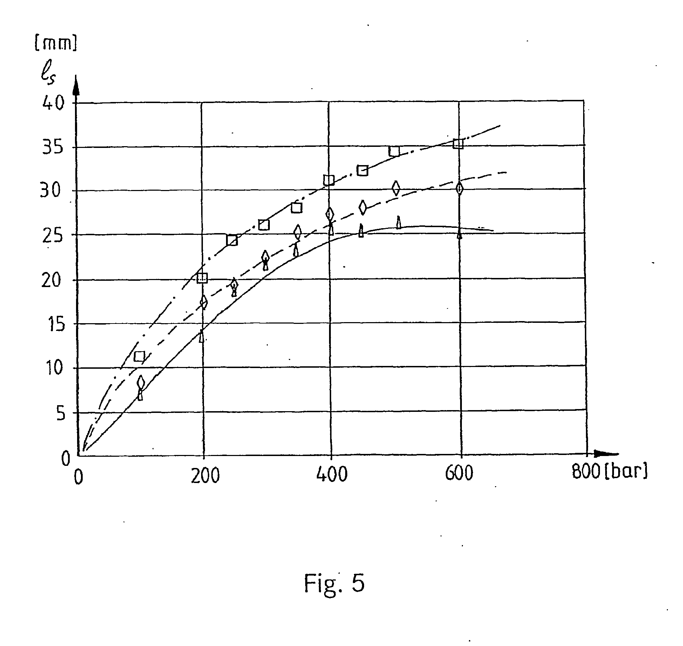

Wird nun eine Beaufschlagung des Flüssigkeitsstrahls z. B. mit Helium (dessen kinematische Gasviskosität kleiner als Luft ist) gemäss dem oben geschilderten Verfahren mit der obigen Vorrichtung vorgenommen, so ergibt sich, wie in **Figur 5** dargestellt ist, für die maximale und die minimale stabile Strahllänge ℓₛ (strichpunktierte und gestrichelte Kurve) eine Erhöhung im Bereich von 5 mm, also von 15 - 25 %, jedoch für die stabile Strahllänge ℓₛ des auftreffenden und somit nicht frei endenden Flüssigkeitsstrahls eine sprunghafte Erhöhung.

Es ist deutlich erkennbar, dass der Flüssigkeitsstrahl ohne die erfindungsgemässe Gasstrahlumhüllung erst bei relativ hohen Druckwerten (ab ca. 300 bar) eine Strahllänge von 3-5 mm bildet (Figur 4). Bei Druckwerten unter 200 bar erleidet der relativ feine Strahl von 30 µm starke Störungen durch das Auftreffen auf eine Oberfläche. Dies zeigt, dass der Flüssigkeitsstrahl ohne die erfindungsgemässe Beaufschlagung mit Gas gar nicht als Wellenleiter für die Materialbearbeitung durch Laserstrahlung brauchbar ist. Wie **Figur 5** zeigt, verleiht erst der erfindungsgemässe Gasstrom dem Strahl die benötigte Stabilität. Zwar ist auch beim erfindungsgemäss gasstrahlumhüllten Flüssigkeitsstrahl eine gewisse Reduktion der stabilen Strahllänge ℓₛ feststellbar, wenn er auf eine Oberfläche auftrifft. Es lassen sich aber trotzdem Strahllängen von 25 mm bei 400 bar und mehr erreichen. Schon mit etwas mehr als 100 bar erhält der Flüssigkeitsstrahl eine stabile Strahllänge von 10 mm.

Die Gasauslassdüse **23,** welche mittig vom Flüssigkeitsstrahl **5** durchströmt wird, kann nun wie in **Figur** 1 dargestellt ist, direkt am Ende der konisch zusammenlaufenden Innenwandung 24 angeordnet werden, es kann aber auch noch ein kleiner kreiszylindrischer Wandteil vorgelagert werden.

Der Gaseinlass kann, wie in **Figur 1** dargestellt, in einer Ebene erfolgen, welche senkrecht vom Flüssigkeitsstrahl **5** durchstossen wird. Die Gaseinlassrohre **26a** bis **26d** können jedoch auch nach oben gegen die Flüssigkeitsdüse (Düsenstein) **1** oder nach unten gegen die Gasauslassdüse **23** gerichtet sein. Nach oben sollte kein grösserer Winkel als 30° und nach unten kein grösserer Winkel als 70° genommen werden.

Die Anzahl der Gaseinlässe ist nicht von grosser Bedeutung; es sollte jedoch darauf geachtet werden, dass ein gleichförmiger Einlass in einem möglichst grossen Abstand von Mantel des Flüssigkeitsstrahls **5** erfolgt.

Der oben beschriebene "tangentiale Gaseinlass" hat sich bewährt. Es können aber auch andere Einlasswinkel benützt werden. Es ist lediglich darauf zu achten, dass der Flüssigkeitsstrahl **5** nicht direkt getroffen und gestört wird.

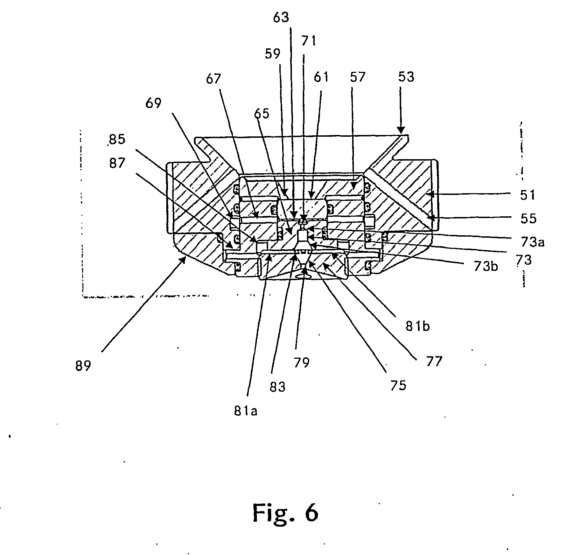

**Figur 6** zeigt einen Querschnitt durch eine Ausführungsform mit einer radialen Einströmung des Beaufschlagungsgases. Im Folgenden werden die Begriffe "oben" und "unten" (welche der Darstellung in der Figur 6 entsprechen) stellvertretend für "zur Eingangsseite hin" bzw. "zur Ausgangsseite hin" verwendet werden. Eine Fassung 51 weist an Ihrer Oberseite einen ringförmigen Anschlussteil **53** auf, welcher eine Art Trichter bildet für eine (nicht dargestellte) Optik, welche die Laserstrahlung zuführt und in den Düsenkanal der Flüssigkeitsdüse **71** fokussiert. In der Fassung **51** sind vorzugsweise mehrere, schräg nach aussen und unten laufende Abflusskanäle **55** vorgesehen, welche die Flüssigkeit ableiten, welche sich z.B. im Fall einer Störung im Anschlussteil **53** sammeln könnte.

Die Fassung **51** hat einen grossen, durchgehenden, kreiszylindrischen Hohlraum, in welchem ein zylindrischer Funktionsteil **57** von unten (gemäss der Darstellung in Fig. 6) in der Art eines Stopfens eingesetzt ist. Die Fassung **51** umschliesst den Funktionsteil **57** also ringförmig und hält ihn in einer koaxialen Anordnung. Oben (d.h. zum Anschlussteil **53** hin) hat der Funktionsteil **57** eine von oben nach unten sich konisch verjüngende Öffnung **59.** Am unteren Ende der konischen Öffnung ist eine Schulter ausgebildet, an welcher das Fensterelement 61 an seiner oberen Seite anliegt. Auf der Unterseite des Fensterelements **61** befindet sich ein Verschlussteil **65.** Zwischen dem Fensterelement **61** und dem Verschlussteil **65** ist ein dünner, z.B. scheibenförmiger Zwischenraum **63** vorgesehen, welcher als Flüssigkeitszuführleitung dient. In axialer Richtung des Funktionsteils **57** betrachtet hat der Zwischenraum **63** eine Dicke von z.B. 0,1 bis 0,4 mm. Seine seitliche Ausdehnung (Durchmesser) kann im Bereich von mehreren Millimetern (z.B. 5-10 mm) liegen.

Die Flüssigkeit (z.B. Wasser) wird über einen Ringkanal 69, welcher an der Innenseite der Fassung **51** ausgebildet ist, und anschliessend über eine (bzw. mehrere) radiale Leitungen **67** des Funktionsteils **57** in den Zwischenraum **63** mit dem erforderlichen Druck (z.B. 400 bar) zugeführt.

Der Verschlussteil **65** ist in der Art eines Stopfens von unten in einen zylindrischen Innenraum des Funktionsteils **57** eingesetzt. Das Fensterelement **61** ist somit auswechselbar wenn der Verschlussteil **65** herausgenommen wird.

Der Verschlussteil **65** hat auf seiner oberen, dem Zwischenraum **63** zugewandten Seite eine Ausnehmung, in welcher eine Flüssigkeitsdüse **71** (sog. Düsenstein) eingesetzt ist. Der Düsenstein hat einen zentralen, axialen Kanal, welcher den feinen Flüssigkeitsstrahl bildet, der die Laserstrahlung in der Art eines optischen Wellenleiters führt. Der Kanal hat einen Durchmesser entsprechend dem Durchmesser des gewünschten Flüssigkeitsstrahls z.B. 30 bis 60 Mikrometer. Der Düsenstein selbst hat einen Durchmesser von 2-4 mm und eine Dicke von z.B. 0,5 bis 2 mm.

Anschliessend an die Flüssigkeitsdüse **71** folgt ein Gasstauraum, der im vorliegenden Beispiel aus einem oberen Teilraum **73** und einem unteren Teilraum **75** gebildet ist. Der obere Teilraum **73** erweitert sich von oben nach unten sukzessive. Er kann sich kontinuierlich oder stufenweise kegelförmig verbreitern. In der vorliegenden Ausführungsform setzt er sich aus einem ersten zylindrischen, dann einem ersten kegelförmigen Abschnitt **73a,** dann einem nachfolgenden zweiten zylindrischen und schliesslich einem zweiten kegelförmigen Abschnitt **73b** zusammen. Er verbreitert sich auf diese Weise von oben nach unten um das drei- bis fünffache des Durchmessers. Ziel ist es, das Beaufschlagungsgas, welches am unteren Ende des Verschlussteils **65** zugeführt wird, möglichst ohne Störung des Flüssigkeitsstrahls nach oben zum Ausgang des Düsenkanals zirkulieren zu lassen.

An der Unterseite des Verschlussteils **65** ist ein Gasdüsenteil **77** angebracht. Dieser wird vom Funktionsteil **65** gehalten (indem er beispielsweise in ein entsprechendes Gewinde des Funktionsteils **65** eingeschraubt ist). Der Gasdüsenteil **77** hat einen Hohlraum, welcher den unteren Teilraum **75** bildet, Er verjüngt sich von oben nach unten konisch und führt zum Gasdüsenkanal **79.** Der Gasdüsenkanal **79** hat einen Durchmesser von z.B. 1-2 mm.

Dort wo die beiden Teilräume **73** und **75** aufeinander stossen und den grössten Durchmesser bilden, ist der Gaseinlassbereich **83.** Hier wird das Beaufschlagungsgas durch sternförmig bzw. radial verlaufende Gaszuführkanäle **81a, 81b** (es sind z.B. 6 solche Gaszuführkanäle vorgesehen) eingeführt: Es ist der Ort, wo ein maximaler (radialer) Abstand zum Flüssigkeitsstrahl besteht, welcher auf der Achse des Verschlussteils **65** verläuft. Die Gaszuführkanäle **81a, 81b** sind z.B. in der oberen Seite des Gasdüsenteils **77** als Vertiefungen ausgeformt. Sie werden durch einen Ringraum **85** versorgt, welcher zwischen Verschlussteil **65** und Funktionsteil **57** ausgebildet ist. Die externe Gaszuführung zum Ringraum **85** ist nicht näher dargestellt.

Der Funktionsteil **57** hat am unteren Ende eine Flansch **87,** welche mit einem Haltering **89** gegen die untere Stirnseite der Fassung **51** fixiert werden kann.

Die Erfindung ist selbstverständlich nicht auf das gezeigte Ausführungsbeispiel beschränkt. Die konstruktive Aufteilung in die verschiedenen Elemente (Fassung, Funktionsteil, Verschlussteil, etc.) erlaubt es, das Modul zu zerlegen, um z.B. den Düsenstein oder das Fensterelement zu ersetzen. Da die Flüssigkeit (z.B. das Wasser) mit hohem Druck zugeführt werden muss, sind zwischen den einzelnen Teilen an geeigneten Stellen Dichtungen erforderlich. (Diese sind in der Figur 6 eingezeichnet, aber nicht näher beschrieben.) Die Unterteilung des Moduls kann z.B. an anderer Stelle erfolgen. Das Modul braucht nicht von unten her zerlegbar zu sein. Das Beaufschlagungsgas kann z.B. am oberen Ende eines solchen zylindrischen Gasstauraums eingeführt werden und zwar durchaus auch in axialer Richtung (statt in radialer). Die axiale Zuführung kann über mehrere Kanäle vorzugsweise in grossem Abstand von der Achse des Stauraums (d.h. in grossem Abstand vom Flüssigkeitsstrahl) erfolgen.

Der Gasdüsenkanal **79** bildet den verengten Gasauslass des Gasstauraums. Er kann jet nach Bedarf eine bestimmte aerodynamische Form aufweisen, um den Gasstrom zu formen. Es ist von Vorteil, den Gasstrahl möglichst fein zu machen (geringer Durchmesser). Mit einer Gasauslassdüse im Bereich von 0,5 - 2 mm lässt sich ein Gasstrom in dem entsprechenden Durchmesser erzeugen. (Dabei versteht sich, dass sich der Gasstrom im Durchmesser verändern kann mit zunehmender Ausbreitungsdistanz, z. B. weil Gas am äusseren Rand verloren geht bzw, abgebremst wird.) Ein dünner Gasstrom hat auch den Vorteil, dass die Menge an benötigtem Gas gering gehalten werden kann. Es ist aber keineswegs ausgeschlossen, mit Gasströmungen grösseren Durchmessers (z. B. 5 mm) zu arbeiten.

Zusammenfassend ist festzustellen, dass die Erfindung es ermöglicht, mit sehr feinen Flüssigkeitsstrahlen zu arbeiten und folglich sehr dünne Schnitte bzw. feine Oberflächenbearbeitungen durchzuführen.

## Patentansprüche

1. Verfahren zur Erzeugung eines Flüssigkeitsstrahls (5), der zur Führung einer in ihn eingekoppelte Laserstrahlung (10) in der Art eines Wellenleiters geeignet ist zwecks Bearbeitung eines Werkstücks (3), wobei der Flüssigkeitsstrahl (5) mit einer Flüssigkeitsdüse (1) erzeugt wird und wobei der Flüssigkeitsstrahl (5) mantelseitig mit einem Gasstrom (35) umgeben wird, **dadurch gekennzeichnet, dass** der Flüssigkeitsstrahl (5) durch eine, entfernt von der Flüssigkeitsdüse (1) angeordnete, den Gasstrom (35) formende Gasauslassdüse (23, 79) hindurchgeführt wird, wobei zwischen der Flüssigkeitsdüse und der Gasauslassdüse (23, 79) ein Zwischenraum mit einer trichterförmigen, nach unten zusammenlaufenden Wandung ausgebildet ist.

2. Verfahren nach Anspruch 1, **dadurch gekennzeichnet, dass** ein Flüssigkeitsstrahl (5) mit einem Durchmesser von 200 µm oder weniger, insbesondere von 60 µm oder weniger erzeugt wird und dass der Gasstrom (35) einen Durchmesser von 0,5-2 mm hat.

3. Verfahren nach einem der Ansprüche 1 bis 2, **dadurch gekennzeichnet, dass** für den Gasstrom ein Gas mit einer kinematischen Gasviskosität verwendet wird, welche kleiner ist als diejenige eines umgebenden Atmosphärengases.

4. Verfahren nach einem der Ansprüche 1 bis 34, **dadurch gekennzeichnet, dass** das Beaufschlagungsgas in einem ersten Strömungsbereich den Flüssigkeitsstrahl nicht treffend einströmt und in einem zweiten, an diesen ersten Strömungsbereich anschliessenden Strömungsbereich um den Flüssigkeitsstrahl (5) herum strömend umgelenkt wird, wobei der Übergang vom ersten in den zweiten Strömungsbereich in einem vorgegebenen radialen Abstand vom Flüssigkeitsstrahl erfolgt und vorzugsweise das Beaufschlagungsgas zur Erzeugung des ersten Strömungsbereichs an mehreren Orten, welche vorzugsweise ausgehend von der Flüssigkeitsachse gleiche Zentriwinkel haben, zugeführt wird.

5. Verfahren nach Anspruch 4, **dadurch gekennzeichnet, dass** dem Beaufschlagungsgas in einem dritten Strömungsbereich eine Strömungsrichtung gegen die Gasauslassdüse (23) aufgeprägt wird, wobei vorzugsweise diese Aufprägung derart erfolgt, dass im dritten Strömungsbereich ein in Ausströmrichtung des Flüssigkeitsstrahls (5) beschleunigender Beaufschlagungsgasstrom sich ergibt.

6. Vorrichtung zur Erzeugung eines Flüssigkeitsstrahls (5), der zur Führung einer in ihn eingekoppelte Laserstrahlung (10) in der Art eines Wellenleiters geeignet ist zwecks Bearbeitung eines Werkstücks (3), mit einer Flüssigkeitsdüse (1) zum Erzeugen des Flüssigkeitsstrahls (5) und mit Mitteln zum mantelseitigen Umgeben des Flüssigkeitsstrahls (5) mit einem Gasstrom (35), **dadurch gekennzeichnet, dass** die Mittel zum mantelseitigen Umgeben des Flüssigkeitsstrahls (5) mit einem Gasstrom (35) eine entfernt von der Flüssigkeitsdüse (1) angeordnete, den Gasstrom (35) formende Gasauslassdüse (23, 79) umfassen, durch welche der Flüssigkeitsstrahl (5) hindurchgeführt werden kann, wobei zwischen der Flüssigkeitsdüse und der Gasauslassdüse (23, 79) ein Zwischenraum mit einer trichterförmigen, nach unten zusammenlaufenden Wandung ausgebildet ist.

7. Vorrichtung nach Anspruch 6. , **dadurch gekennzeichnet, dass** der Zwischenraum einen Gasstauraum (73, 75) enthält.

8. Vorrichtung nach Anspruch 6. oder 7, **dadurch gekennzeichnet, dass** die Flüssigkeitsdüse (1, 71) einen kreisförmigen Durchlass bildet, durch welchen der Flüssigkeitsstrahl (5) zusammen mit dem Gasstrom (35) durchtreten kann.

9. Vorrichtung nach einem der Ansprüche 6 bis 8. , **dadurch gekennzeichnet, dass** eine der Flüssigkeitsdüse (1, 71) zugeordnete Strahlachse und eine der Gasauslassdüse (35) zugeordnete Achse im Wesentlichen zusammenfallen.

10. Vorrichtung nach einem der Ansprüche 6 bis 9. , **dadurch gekennzeichnet, dass** die Flüssigkeitsdüse einen Durchmesser im Bereich von 20 µm bis 200 µm und der Durchmesser der Gasauslassdüse einen Durchmesser im Bereich von 0,5 mm bis 2 mm hat.

11. Vorrichtung nach einem der Ansprüche 6. bis 10, **dadurch gekennzeichnet, dass** die Gasauslassdüse einen Innendurchmesser hat, der im Wesentlichen zehn- bis zwanzigmal so gross ist wie ein Innendurchmesser der Flüssigkeitsdüse (1).

12. Vorrichtung (7) nach Anspruch 6, **gekennzeichnet durch** ein Gehäuse (7) mit einer umlaufenden, die Flüssigkeitsdüse (1) aufnehmenden Wandung (20, 24) und mit wenigstens einem Gaseinlass (25a-d) für das Beaufschlagungsgas, wobei der Gaseinlass der Flüssigkeitsdüse (1) strömungsmässig nachgeordnet angeordnet ist.

13. Vorrichtung (7) nach Anspruch 12, **dadurch gekennzeichnet, dass** der wenigstens eine Gaseinlass (25a-d) eine Einströmrichtung in das Gehäuse (7) für das Beaufschlagungsgas definiert, die Wandung im Bereich des wenigstens einen Gaseinlasses (25a-d) einen kreisförmigen Querschnitt hat, und die Einströmrichtung, vorzugsweise tangential, auf diese Wandung den Flüssigkeitsstrahl nicht direkt beeinflussend trifft.

14. Vorrichtung (7) nach einem der Ansprüche 12 oder 13, **dadurch gekennzeichnet, dass** das Gehäuse (7) als Doppelkegel ausgebildet ist, wobei in der einen Kegelspitze die Flüssigkeitsdüse (1) angeordnet ist, und die andere Kegelspitze die Gasauslassdüse (23) hat, und der wenigstens eine Gaseinlass (25a-d) vorzugsweise in unmittelbarer Nähe des grössten Durchmessers des Doppelkegels angeordnet ist.

15. Vorrichtung (7) nach einem der Ansprüche 6 bis 14 mit einem einen Flüssigkeitsstahl (5) erzeugenden Düsenkanal (11), **dadurch gekennzeichnet, dass** eine Flüssigkeitsdüse (1) einen scharfkantigen Übergang (15) von einer Düsenoberfläche (13) an einem Düseneingang in den Düsenkanal (11) aufweist, wobei der scharfkantige Übergang (15) einen Radius kleiner 10 Mikrometer, vorzugsweise kleiner 2 Mikrometer hat.

16. Vorrichtung (1) nach Anspruch 15, **dadurch gekennzeichnet, dass** des Düsenkanals (11) eine Länge (e) hat, die kleiner ist als fünf Mal, vorzugsweise drei Mal, ein Durchmesser (d) des Düsenkanals.

17. Vorrichtung (1) nach Anspruch 15 oder 16, **dadurch gekennzeichnet, dass** die Länge (e) des Düsenkanals (11) und damit die Dicke der Flüssigkeitsdüse (1) gerade so dick gewählt ist, dass die Düse (1) gerade dem auf ihr lastenden Flüssigkeitseingangsdruck standhält, wobei zur mechanischen Stabilitätsverstärkung ausgehend von einer zylindrischen Düsenkanalinnenwand (17) am Düsenkanalausgang eine kegelartig nach aussen verlaufende Abschrägung (19) der Düsenunterseite ausgebildet ist und die Abschrägung (19) unter einem Winkel zwischen 90° und 150°, vorzugsweise einem Winkel zwischen 130° und 140°, zu einer Längsachse des Düsenkanals (11) verlaufend ausgebildet ist.

## Claims

1. Method for generating a jet (5) of fluid which is suitable for guiding, in the manner of a waveguide, a laser beam (10) which is injected into it, for the purpose of processing a workpiece (3), wherein the jet (5) of fluid is generated with a fluid nozzle (1), and wherein the jet (5) of fluid is surrounded on the outside by a gas stream (35), **characterized in that** the jet (5) of fluid is guided through a gas outlet nozzle (23, 79) which is arranged at a distance from the fluid nozzle (1) and forms the gas stream (35), wherein an intermediate space with a funnel-shaped, downwardly converging wall is formed between the fluid nozzle and the gas outlet nozzle (23, 79).

2. Method according to Claim 1, **characterized in that** a jet (5) of fluid with a diameter of 200 µm or less, in particular 60 µm or less, is generated, and **in that** the gas stream (35) has a diameter of 0.5-2 mm.

3. Method according to one of Claims 1 to 2, **characterized in that** a gas with a kinematic gas viscosity which is less than that of a surrounding atmospheric gas is used for the gas stream.

4. Method according to one of Claims 1 to 3, **characterized in that** the applied gas flows into a first flow region without affecting the jet of fluid and is deflected into a second flow region, adjoining this first flow region, so as to flow around the jet (5) of fluid, the junction between the first and second flow regions being at a predefined radial distance from the jet of fluid, and the applied gas for generating the first flow region being preferably fed in at a plurality of locations which are preferably at the same centering angles starting from the fluid axis.

5. Method according to Claim 4, **characterized in that** in a third flow region a direction of flow counter to the gas outlet nozzle (23) is impressed on the applied gas, wherein this impressing process is preferably carried out in such a way that in the third flow region an applied gas stream which accelerates in the outflow direction of the jet (5) of fluid is produced.

6. Device for generating a jet (5) of fluid which is suitable for guiding, in the manner of a waveguide, a laser beam (10) which is injected into it, for the purpose of processing a workpiece (3), having a fluid nozzle (1) for generating the jet (5) of fluid, and having means for surrounding the jet (5) of fluid on the outside with a gas stream (35), **characterized in that** the means for surrounding the jet (5) of fluid on the outside with a gas stream (35) comprise a gas outlet nozzle (23, 79) which is arranged at a distance from the fluid nozzle (1) and forms the gas stream (35) and through which the jet (5) of fluid can be guided, wherein an intermediate space with a funnel-shaped, downwardly converging wall is formed between the fluid nozzle and the gas outlet nozzle (23, 79).

7. Device according to Claim 6, **characterized in that** the intermediate space contains a gas retaining space (73, 75).

8. Device according to Claim 6 or 7, **characterized in that** the fluid nozzle (1, 71) forms a circular passage through which the jet (5) of fluid can pass together with the gas stream (35).

9. Device according to one of Claims 6 to 8, **characterized in that** a jet axis which is assigned to the fluid nozzle (1, 71) and an axis which is assigned to the gas outlet nozzle (35) essentially coincide.

10. Device according to one of Claims 6 to 9, **characterized in that** the fluid nozzle has a diameter in the range from 20 µm to 200 µm, and the diameter of the gas outlet nozzle has a diameter in the range from 0.5 mm to 2 mm.

11. Device according to one of Claims 6 to 10, **characterized in that** the gas outlet nozzle has an internal diameter which is essentially 10 to 20 times as large as the internal diameter of the fluid nozzle (1).

12. Device (7) according to Claim 6, **characterized by** a housing (7) with a circumferential wall (20, 24) which holds the fluid nozzle (1), and with at least one gas inlet (25a-d) for the applied gas, wherein the gas inlet is arranged downstream of the fluid nozzle (1) in terms of flow.

13. Device (7) according to Claim 12, **characterized in that** the at least one gas inlet (25a-d) defines an inflow direction into the housing (7) for the applied gas and the wall has a circular cross section in the region of the at least one gas inlet (25a-d) and the inflow direction preferably impacts on this wall tangentially, in a way which does not affect the fluid jet directly.

14. Device (7) according to one of Claims 12 or 13, **characterized in that** the housing (7) is embodied as a double cone, wherein the fluid nozzle (1) is arranged in one of the cone tips and the other cone tip has the gas outlet nozzle (23), and the at least one gas inlet (25a-d) is preferably arranged in the direct vicinity of the largest diameter of the double cone.

15. Device (7) according to one of Claims 6 to 14 having a nozzle duct (11) which generates a jet (5) of fluid, **characterized in that** a fluid nozzle (1) has a sharp-edged transition (15) from a nozzle surface (13) at a nozzle inlet into the nozzle duct (11), the sharp-edged transition (15) having a radius of less than 10 micrometers, preferably less than 2 micrometers.

16. Device (1) according to Claim 15, **characterized in that** the nozzle duct (11) has a length (e) which is less than five times, preferably three times, a diameter (d) of the nozzle duct.

17. Device (1) according to Claim 15 or 16, **characterized in that** the length (e) of the nozzle duct (11) and thus the thickness of the fluid nozzle (1) is selected to be just so thick that the nozzle (1) just withstands the fluid inlet pressure loading it, wherein, in order to mechanically reinforce the stability, a slope (19) is formed running outward in the manner of a cone on the underside of the nuzzle, starting from a cylindrical nozzle duct inner wall (17) at the nozzle duct outlet, and the slope (19) is constructed so that it extends at an angle between 90° and 150°, preferably at an angle between 130° and 140°, with respect to a longitudinal axis of the nozzle duct (11).

## Revendications

1. Procédé pour générer un jet de liquide (5) qui est conçu pour guider un rayon laser (10) injecté dans celui-ci à la manière d'un guide d'onde en vue d'usiner une pièce (3), le jet de liquide (5) étant généré avec une buse à liquide (1) et le jet de liquide (5) étant entouré du côté de l'enveloppe par un flux de gaz (35), **caractérisé en ce que** le jet de liquide (5) passe à travers une buse de sortie de gaz (23, 79) éloignée de la buse à liquide (1) et formant le flux de gaz (35), un espace intermédiaire ayant une paroi en forme d'entonnoir qui se rétrécit vers le bas étant formé entre la buse à liquide et la buse de sortie de gaz (23, 79).

2. Procédé selon la revendication 1, **caractérisé en ce qu'**un jet de liquide (5) ayant un diamètre de 200 µm ou moins, notamment de 60 µm est généré et que le flux de gaz (35) a un diamètre de 0,5 à 2 mm.

3. Procédé selon l'une des revendications 1 à 2, **caractérisé en ce que** le gaz utilisé pour le flux de gaz est un gaz dont la viscosité cinématique est inférieure à celle d'un gaz atmosphérique qui l'entoure.

4. Procédé selon l'une des revendications 1 à 3, **caractérisé en ce que** le gaz d'alimentation est injecté dans une première zone d'écoulement du jet de liquide sans le toucher et il est dévié de manière à s'écouler autour du jet de liquide (5) dans une deuxième zone qui est rattachée à cette première zone d'écoulement, la transition de la première à la deuxième zone d'écoulement s'effectuant à un écart radial prédéfini du jet de liquide et le gaz d'alimentation étant de préférence acheminé depuis plusieurs endroits en vue de former la première zone d'écoulement, lesquels présentent de préférence le même angle au centre en partant de l'axe du liquide.

5. Procédé selon la revendication 4, **caractérisé en ce qu'**un sens d'écoulement contre la buse de sortie du gaz (23) est rappliqué au gaz d'alimentation dans une troisième zone d'écoulement, cette application étant de préférence effectuée de manière à obtenir dans la troisième zone d'écoulement un flux de gaz d'alimentation qui accélère le flux de liquide (5).

6. Dispositif pour générer un jet de liquide (5) qui est conçu pour guider un rayon laser (10) injecté dans celui-ci à la manière d'un guide d'onde en vue d'usiner une pièce (3), comprenant une buse à liquide (1) pour générer le jet de liquide (5) et comprenant des moyens pour entourer le jet de liquide (5) du côté de l'enveloppe par un flux de gaz (35), **caractérisé en ce que** les moyens pour entourer le jet de liquide (5) du côté de l'enveloppe par un flux de gaz (35) comprennent une buse de sortie de gaz (23, 79) éloignée de la buse à liquide (1) et formant le flux de gaz (35), à travers lesquels peut passer le jet de liquide (5), un espace intermédiaire ayant une paroi en forme d'entonnoir qui se rétrécit vers le bas étant formé entre la buse à liquide et la buse de sortie de gaz (23, 79).

7. Dispositif selon la revendication 6, **caractérisé en ce que** l'espace intermédiaire contient un espace d'accumulation de gaz (73, 75).

8. Dispositif selon la revendication 6 ou 7, **caractérisé en ce que** la buse à liquide (1, 71) forme un passage circulaire à travers lequel le jet de liquide (5) peut passer conjointement avec le flux de gaz (35).

9. Dispositif selon l'une des revendications 6 à 8, **caractérisé en ce qu'**un axe de jet associé à la buse à liquide (1, 71) coïncide sensiblement avec un axe associé à la buse de sortie de gaz (35).

10. Dispositif selon l'une des revendications 6 à 9, **caractérisé en ce que** la buse à liquide possède un diamètre de 20 µm à 200 µm et la buse de sortie de gaz possède un diamètre dans la plage de 0,5 à 2 mm.

11. Dispositif selon l'une des revendications 6 à 10, **caractérisé en ce que** la buse de sortie de gaz possède un diamètre intérieur qui est pour l'essentiel dix à vingt fois plus grand qu'un diamètre intérieur de la buse à liquide (1).

12. Dispositif (7) selon la revendication 6, **caractérisé par** un boîtier (7) comprenant une paroi (20, 24) périphérique qui accueille la buse à liquide (1) et comprenant au moins une entrée de gaz (25a-d) pour le gaz d'alimentation, l'entrée de gaz de la buse à liquide (1) étant disposée à la suite dans le sens de l'écoulement.

13. Dispositif (7) selon la revendication 12, **caractérisé en ce que** l'au moins une entrée de gaz (25a-d) définit un sens d'injection dans le boîtier (7) pour le gaz d'alimentation, la paroi présente une section transversale circulaire dans la zone de l'au moins une entrée de gaz (25a-d) et le sens de l'injection vient heurter cette paroi de préférence de manière tangentielle sans influencer directement le jet de liquide.

14. Dispositif (7) selon l'une des revendications 12 ou 13, **caractérisé en ce que** le boîtier (7) est réalisé sous la forme d'un double cône, la buse à liquide (1) étant disposée dans l'une des pointes de cône et l'autre pointe de cône comprenant la buse de sortie de gaz (23), et l'au moins une entrée de gaz (25a-d) est disposée de préférence à proximité immédiate du plus grand diamètre du double cône.

15. Dispositif (7) selon l'une des revendications 6 à 14 comprenant un canal de buse (11) qui génère un jet de liquide (5), **caractérisé en ce qu'**une buse à liquide (1) présente une transition (15) à bords vifs depuis une surface de buse (13) au niveau d'une entrée de buse dans le canal de buse (11), la transition (15) à bords vifs possédant un rayon inférieur à 10 micromètres, de préférence inférieur à 2 micromètres.

16. Dispositif (1) selon la revendication 15, **caractérisé en ce que** le canal de buse (11) possède une longueur (e) qui est inférieure à cinq fois, de préférence trois fois un diamètre (d) du canal de buse.

17. Dispositif (1) selon la revendication 15 ou 16, **caractérisé en ce que** la longueur (e) du canal de buse (11) et ainsi l'épaisseur de la buse à liquide (1) est choisie juste suffisante pour que la buse (1) résiste juste à la pression d'entrée du liquide à laquelle elle est soumise, le renforcement de la stabilité mécanique étant réalisé en partant d'une paroi intérieure du canal de buse cylindrique (17) au niveau de la sortie du canal de buse et en formant un biseau (19) qui s'étend vers l'extérieur en forme de cône du dessous de la buse et le biseau (19) est formé avec un angle compris entre 90° et 150°, de préférence avec un angle compris entre 130° et 140° par rapport à un axe longitudinal du canal de buse (11).
